# FASCICULE DE BREVET EUROPEEN

(11) **EP 2 734 423 B1**
(45) Date de publication et mention de la délivrance du brevet: **06.04.2016**
(21) Numéro de dépôt: 12725380.5
(22) Date de dépôt: 31.05.2012
(51) Int. Cl.: B60S 1/48

(54) **SUPPORT DE CONNECTEURS ET DISPOSITIF DE DISTRIBUTION DE LIQUIDE LAVE-GLACE POUR BALAIS D'ESSUIE-GLACE DE VEHICULE AUTOMOBILE**
STÜTZE FÜR BEFESTIGUNGSVORRICHTUNG UND WASCHFLÜSSIGKEITSZUFÜHRVORRICHTUNG FÜR EINE FAHRZEUG WISCHERANLAGE
CONNECTOR SUPPORT AND LIQUID DISTRIBUTING APPARATUS FOR VEHICLE WINDSCREEN WIPERS

(30) Priorité: 17.06.2011 FR 1155339
(43) Date de publication de la demande: 28.05.2014
(73) Titulaire: Valeo Systèmes d'Essuyage, 78321 Le Mesnil Saint Denis (FR)
(72) Inventeur: CAILLOT, Gérald, F-78720 Cernay-la-Ville (FR); IZABEL, Vincent, F-91380 Chilly-Mazarin (FR); JARASSON, Jean-Michel, F-78321 Le Mesnil-Saint-Denis (FR); THEBAULT, Denis, F-92170 Vanves (FR)
(74) Mandataire: Léveillé, Christophe
(86) Numéro de dépôt international: PCT/EP2012/060220
(87) Numéro de publication internationale: WO 2012/171804

(56) Documents cités:
- DE-U1-202009 012 431
- FR-A1- 2 804 395
- FR-A1- 2 950 844

## Description

La présente invention est relative à un support de connecteurs pour dispositif de distribution de liquide lave-glace de balais d'essuie-glace de véhicule automobile comportant au moins un clapet anti-retour. La présente invention concerne également un dispositif de distribution muni d'un support de connecteurs.

Il existe de nombreux types de balais d'essuie-glace. Parmi ceux-ci, on distingue notamment les balais d'essuie-glace à simple rampe d'arrosage (ou mono-rampe) permettant la distribution du liquide lave-glace sur la surface vitrée d'un côté du balai et des balais d'essuie-glace à double rampe d'arrosage permettant la distribution de liquide de chaque côté du balai selon le sens d'avancée du balai.

Les gicleurs sont alimentés en liquide lave-glace contenu dans un réservoir par l'intermédiaire d'une pompe. Pour cela, une conduite principale sous-capot transporte le liquide lave-glace prélevé dans le réservoir par la pompe vers un dispositif de distribution qui distribue à son tour le liquide vers deux conduites secondaires de balai d'essuie-glace, elles-mêmes raccordées aux rampes d'arrosage. On profite de cette zone de jonction entre la conduite principale sous-capot et les conduites secondaires des balais d'essuie-glace pour disposer des clapets anti-retour dans le dispositif de distribution, et éviter ainsi le retour de liquide des balais d'essuie-glace vers la pompe.

Par ailleurs, certains systèmes prévoient de réchauffer le liquide lave-glace lorsque sa température est trop basse, par exemple en-dessous de 5°C. Pour réaliser le réchauffage proprement dit du liquide lave-glace, le réseau de conduites comporte par exemple des conducteurs électriques chauffants noyés dans la masse. Ainsi le liquide lave-glace est réchauffé et acheminé dans la conduite jusqu'au(x) gicleur(s) sans obstacle dans le canal de circulation du liquide lave-glace tout en limitant l'encombrement et le coût de la conduite. Le document DE 20 2009 012431 U montre un support de connecteurs selon le préambule de la revendication 1.

Un des buts de la présente invention est de proposer un dispositif de distribution qui s'adapte facilement à toute configuration de balais d'essuie-glace, chauffés ou non, à simple rampe ou à deux rampes d'arrosage.

A cet effet, la présente invention a pour objet un support de connecteurs pour dispositif de distribution de liquide lave-glace de balais d'essuie-glace de véhicule automobile, comportant un moyen de fixation apte à maintenir au moins un clapet anti-retour, caractérisé en ce qu'il comporte en outre un premier moyen de fixation apte à maintenir de manière amovible un premier connecteur électrique et un deuxième moyen de fixation apte à maintenir de manière amovible un deuxième connecteur électrique, le moyen de fixation du clapet anti-retour, le premier moyen de fixation amovible du premier connecteur électrique et le deuxième moyen de fixation amovible du deuxième connecteur électrique étant indépendants.

Selon une ou plusieurs caractéristiques du support de connecteurs, prise seule ou en combinaison :
- le premier et/ou le deuxième moyen de fixation amovible est formé par emboîtage élastique,
- le premier et/ou le deuxième moyen de fixation amovible par emboîtage élastique comporte au moins une paire de pattes élastiques d'accrochage aptes à clipper un connecteur électrique de forme complémentaire,
- le premier et/ou le deuxième moyen de fixation amovible par emboîtage élastique est formé par au moins une portion d'une embase du support de connecteurs, conformée pour coopérer avec des pattes élastiques de clippage complémentaires portées par les connecteurs électriques,
- le premier et le deuxième moyens de fixation amovibles sont identiques,
- le moyen de fixation du clapet anti-retour est apte à maintenir au moins un clapet anti-retour de manière amovible,
- le moyen de fixation amovible apte à maintenir au moins un clapet anti-retour comporte un logement de forme générale sensiblement cylindrique, conformé pour recevoir axialement deux clapets anti-retour l'un au dessus de l'autre, le logement présentant une première ouverture conformée pour le passage des entrées respectives des clapets anti-retour, une deuxième ouverture conformée pour le passage des deux premières sorties respectives des clapets anti-retour et une troisième ouverture conformée pour le passage des deux deuxièmes sorties respectives des clapets anti-retour,
- le support de connecteurs comporte une embase présentant au moins une paire de pattes élastiques de retenue en bordure du logement, pour clipper au moins un clapet anti-retour,
- les parois du logement sont conformées pour maintenir les clapets anti-retour par déformation élastique,
- le premier et le deuxième moyens de fixation amovibles aptes à maintenir respectivement un premier et un deuxième connecteurs électriques et le moyen de fixation apte à maintenir au moins un clapet anti-retour, sont agencés sur une même face d'une embase du support de connecteurs,
- le support de connecteurs comporte une embase présentant un moyen de maintien à un véhicule automobile,
- le moyen de maintien comporte trois glissières agencées sur la tranche de l'embase pour le passage de trois pattes de fixation complémentaires du véhicule automobile,
- le support de connecteurs est en matériau plastique et est réalisé en une seule pièce par moulage.

L'invention a aussi pour objet un dispositif de distribution comportant :
- un support de connecteurs tel que décrit précédemment,
- au moins un clapet anti-retour fixé au support de connecteur, le clapet anti-retour présentant une entrée et deux sorties,
- une conduite principale sous-capot comportant un manchon extrudé d'au moins un canal de circulation hydrauliquement raccordé à l'entrée du clapet anti-retour, et
- deux conduites secondaires de balai d'essuie-glace comportant un manchon extrudé d'au moins un canal de circulation hydrauliquement raccordé à une sortie respective du clapet anti-retour.

Selon un exemple de réalisation du dispositif de distribution, la conduite principale sous-capot et les conduites secondaires de balai d'essuie-glace comportent respectivement au moins deux conducteurs chauffants noyés dans la masse du manchon et le dispositif de distribution comporte deux connecteurs électriques maintenus respectivement dans le premier et le deuxième moyens de fixation amovible du support de connecteur, les conducteurs chauffants des conduites secondaires de balai d'essuie-glace étant électriquement raccordés dans un connecteur électrique respectif.

Ainsi, deux clapets anti-retour et deux connecteurs électriques peuvent être fixés au support de connecteurs. Le dispositif de distribution de liquide lave-glace peut alors être utilisé pour des balais d'essuie-glace à double rampe d'arrosage dont les conduites sont chauffées. Le support de connecteurs permet ainsi de raccorder hydrauliquement les canaux de circulation de la conduite principale sous-capot aux canaux de circulation des conduites secondaires de balai d'essuie-glace par l'intermédiaire des deux clapets anti-retour. Egalement, le support de connecteurs permet de raccorder électriquement les fils électriques du véhicule automobile aux conducteurs chauffants des conduites secondaires de balai d'essuie-glace par l'intermédiaire des connecteurs électriques pour réchauffer le liquide lave-glace.

Ce même support de connecteurs s'adapte très facilement à un dispositif de distribution de liquide lave-glace pour balais d'essuie-glace de véhicule automobile à double rampe d'arrosage sans chauffage. Dans ce cas, il suffit de ne pas fixer les connecteurs électriques dans les moyens de fixation amovibles du support de connecteurs et de raccorder des conduites sans conducteurs chauffants.

Egalement, ce même support de connecteurs s'adapte très facilement à un dispositif de distribution de liquide lave-glace pour balais d'essuie-glace mono-rampe, chauffés ou non, présentant une unique rampe d'arrosage pour la distribution du liquide lave-glace sur un côté du bras du balai d'essuie-glace. Dans ce cas, un unique clapet anti-retour est fixé au support de connecteur.

Les moyens de fixation du raccordement hydraulique et les moyens de fixation du raccordement électrique sont indépendants l'un de l'autre, c'est-à-dire complètement séparés.

Il en résulte une très grande souplesse pour la destination finale du support de connecteurs pouvant ainsi s'adapter à différentes configurations du dispositif de distribution.

Le support de connecteurs est par ailleurs robuste et peut donc supporter les contraintes associées aux exigences des constructeurs automobiles. En outre, les entrées/sorties hydraulique et électrique sont facilement accessibles. Il est notamment facile d'accéder aux entrées/sorties des clapets anti-retour pour monter/démonter la conduite principale sous-capot et les conduites secondaires de balai d'essuie-glace.

Le support de connecteurs est donc standard. Il intègre plusieurs fonctions tout en étant simple à réaliser. Sa modularité permet de l'adapter à tout type de véhicule sans occasionner de coûts supplémentaires.

D'autres caractéristiques et avantages de l'invention ressortiront de la description suivante, donnée à titre d'exemple, sans caractère limitatif, en regard des dessins annexés sur lesquels :
- la figure 1 représente une vue schématique d'éléments d'un dispositif de distribution de liquide lave-glace pour balai d'essuie-glace de véhicule automobile,
- la figure 2 représente une vue en détail de l'encadré en pointillés du dispositif de distribution de la figure 1,
- la figure 3 représente les éléments du dispositif de distribution de la figure 2 à l'état désassemblé,
- la figure 4 représente une vue en perspective d'un support de connecteurs,
- la figure 5a représente une vue schématique en perspective d'un support de connecteurs selon un deuxième mode de réalisation assemblé à deux connecteurs électriques et deux clapets anti-retour,
- la figure 5b représente une vue de dessous des éléments de la figure 5a, et
- la figure 6 représente une vue schématique d'éléments d'un troisième mode de réalisation d'un dispositif de distribution de liquide lave-glace pour balai d'essuie-glace de véhicule automobile.
Sur ces figures, les éléments identiques portent les mêmes numéros de référence.

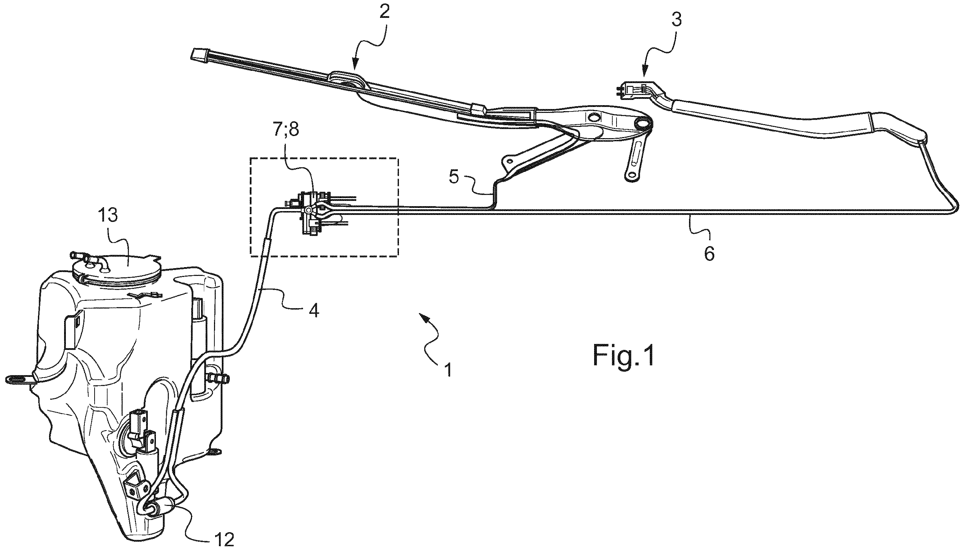

La figure 1 représente une vue schématique générale des éléments d'un premier mode de réalisation d'un dispositif de distribution de liquide lave-glace 1 pour balais d'essuie-glace 2, 3 de véhicule automobile à double rampe d'arrosage (un seul balai est représenté sur la figure 1).

Les balais d'essuie-glace 2, 3 à deux rampes présentent une rampe d'arrosage pourvue d'un ou d'une multitude de gicleurs ou orifices d'arrosage sous pression, permettant la distribution du liquide lave-glace sur la surface vitrée, de chaque côté du bras du balai d'essuie-glace (non représenté). Le liquide lave-glace est envoyé uniquement sur la partie avant du balai, c'est-à-dire que le liquide lave-glace est envoyé sur la rampe d'arrosage située du côté duquel le bras du balai d'essuie-glace avance pendant une phase montante du balayage et de l'autre côté pendant la phase descendante du balayage. Cet agencement permet d'essuyer instantanément le liquide lave-glace après son dépôt sur la surface vitrée, supprimant ainsi tout intervalle durant lequel la vision aurait pu être réduite.

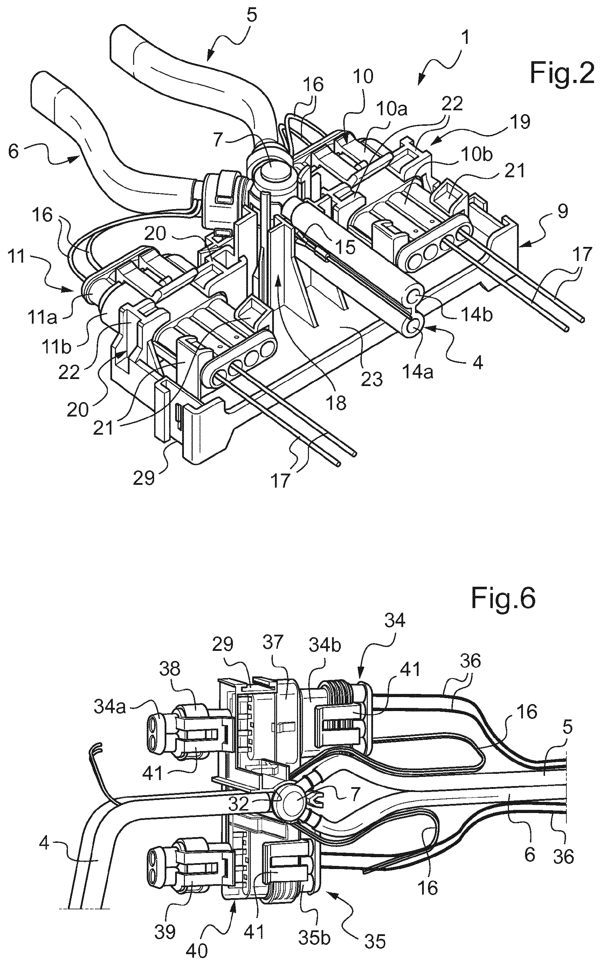

Le dispositif de distribution de liquide lave-glace 1 comporte une conduite principale sous-capot 4, deux conduites secondaires de balai d'essuie-glace 5, 6, deux clapets anti-retour 7, 8, un support de connecteurs 9 (figure 2) et deux connecteurs électriques 10, 11.

Dans ce premier exemple de réalisation, la conduite principale sous-capot 4 et les conduites secondaires de balai d'essuie-glace 5, 6 sont chauffées pour réchauffer le liquide lave-glace. Le liquide lave-glace réchauffé participe au maintien de la fonction lavage à basse température, au maintien des caractéristiques de la structure du balai et au dégivrage des surfaces vitrées.

La conduite principale sous-capot 4 est raccordée hydrauliquement d'une part à une pompe de liquide lave-glace 12 du véhicule automobile elle-même raccordée à un réservoir 13 et d'autre part, aux entrées respectives des clapets anti-retour 7, 8.

Les conduites secondaires de balai d'essuie-glace 5, 6 sont raccordées hydrauliquement d'une part aux sorties respectives des clapets anti-retour 7, 8 et d'autre part aux rampes d'arrosage respective des balais d'essuie-glace 2, 3.

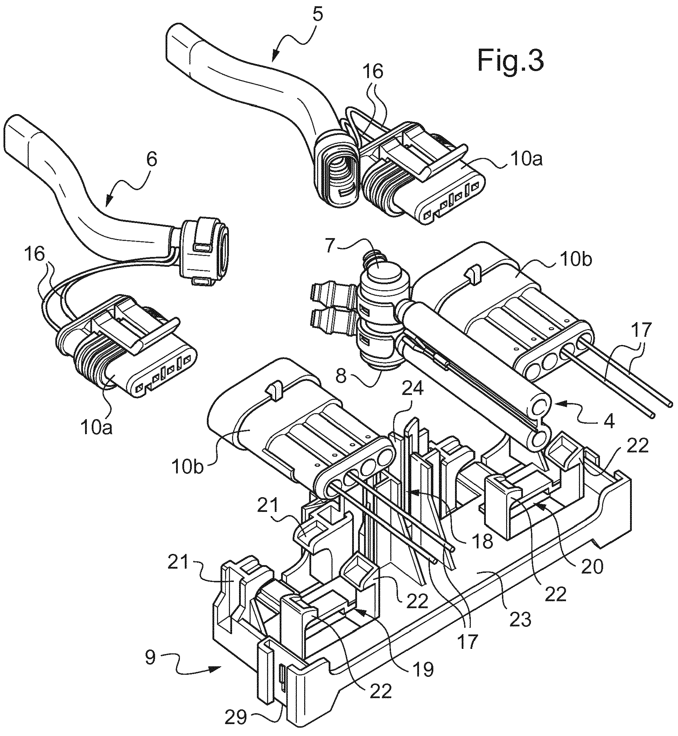

Mieux visible sur les figures 2 et 3 où l'on peut voir une vue en coupe de la conduite principale sous-capot 4, la conduite principale sous-capot 4 et les conduites secondaires de balai d'essuie-glace 5, 6 comportent respectivement un manchon extrudé de deux canaux de circulation 14a, 14b et deux conducteurs chauffants 15, 16. Les conducteurs chauffants 15 de la conduite principale sous-capot 4 et les conducteurs chauffants 16 des conduites secondaires de balai d'essuie-glace 5, 6 sont noyés dans la masse du manchon respectif et s'étendent hors de celui-ci pour être raccordés.

Chaque clapet anti-retour 7, 8 comporte une entrée et deux sorties, par exemple agencés en Y, pour raccorder hydrauliquement les canaux de circulation 14a, 14b de la conduite principale sous capot 4 aux canaux de circulation des conduites secondaires de balai d'essuie-glace 6, 7 disposées à l'extérieur du véhicule automobile.

Les clapets anti-retour 7, 8 permettent le passage du liquide pompé dans le sens de circulation allant de la pompe 12 vers la rampe et le blocage du retour du flux de liquide pompé dans l'autre sens, c'est-à-dire des balais 2, 3 vers la pompe 12. Les clapets anti-retour 7, 8 évitent ainsi toute redescente de liquide des balais d'essuie-glace 2, 3 vers la pompe 12, notamment en phase d'arrêt de distribution de liquide dans un canal de circulation.

Les clapets anti-retour 7, 8 présentent une forme générale cylindrique. Ce peut être des éléments distincts qui s'assemblent coaxialement. Ils peuvent aussi être réalisés en un seul tenant. Ils peuvent aussi comporter un adaptateur (non représenté) dans lequel ils sont logés.

Les connecteurs électriques 10, 11 raccordent électriquement les fils électriques 17 d'alimentation du véhicule automobile aux conducteurs chauffants 16 respectifs des conduites secondaires des balais d'essuie-glace 5, 6. Les conducteurs chauffants 15 de la conduite principale sous-capot 4 sont par exemple raccordés ensemble en sortie du manchon du côté du support de connecteurs 9. De façon standard, les connecteurs électriques 10, 11 comportent une partie femelle de connexion 10a, 11a respective, s'enfichant dans une partie mâle de connexion complémentaire 10b, 11b. Les connecteurs électriques 10, 11 comportent quatre raccords pour le raccordement de quatre fils électriques, permettant aussi le raccordement des fils électriques d'alimentation des éléments chauffants des balais d'essuie-glaces (non représentés).

Le support de connecteurs 9 comporte un moyen de fixation 18 pour maintenir les deux clapets anti-retour 7, 8, un premier moyen de fixation 19 apte à maintenir de manière amovible le premier connecteur électrique 10 et un deuxième moyen de fixation 20 apte à maintenir de manière amovible le deuxième connecteur électrique 11.

Le premier et le deuxième moyens de fixation 19, 20 sont aptes à maintenir respectivement le premier et le deuxième connecteurs électriques 10, 11 de manière amovible, c'est-à-dire que les connecteurs électriques 10, 11 peuvent être montés et démontés du support de connecteurs 9. Les moyens de fixation 19, 20 des connecteurs électriques 10, 11 et le moyen de fixation 18 apte à maintenir les deux clapets anti-retour 7, 8 sont indépendants l'un de l'autre. On peut ainsi fixer le premier connecteur électrique 10 indépendamment du deuxième connecteur électrique 11 et des clapets anti-retour 7 et 8.

Selon un exemple de réalisation, le premier et le deuxième moyens de fixation amovibles 19, 20 sont identiques. Par exemple, le premier et le deuxième moyens de fixation amovible 19, 20 sont formés par emboîtage élastique.

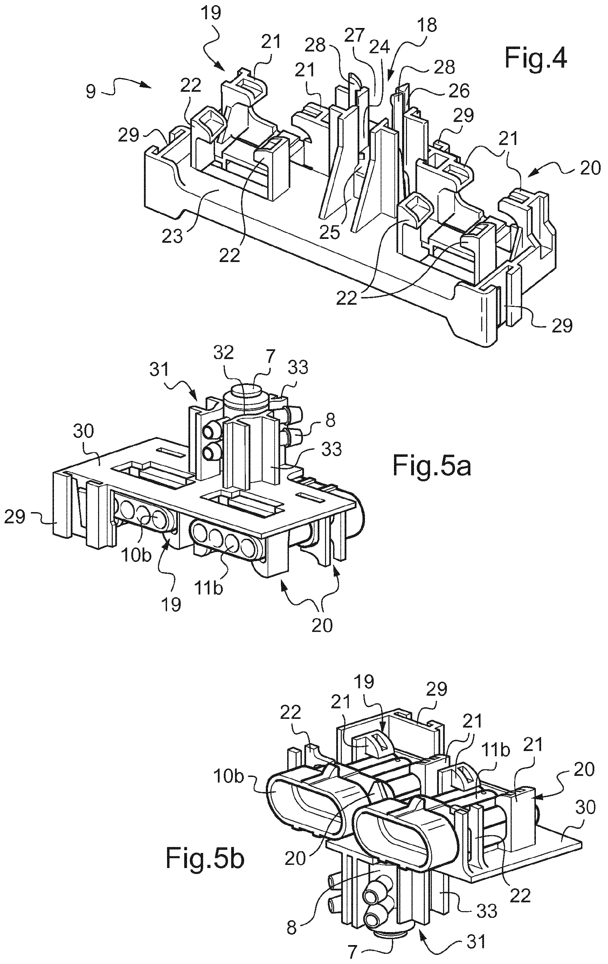

Plus spécifiquement et comme on peut mieux le voir sur la figure 4, le premier et le deuxième moyens de fixation par emboîtage élastique 19, 20 comportent deux paires de pattes élastiques d'accrochage 21, 22 agencées symétriquement sur l'embase 23 de forme générale plane du support de connecteurs 9. Les pattes élastiques d'accrochage 21, 22 peuvent s'écarter élastiquement pour clipper le premier et le deuxième connecteurs électriques 10, 11 de forme complémentaire. C'est par exemple la partie mâle de connexion 10b, 11b qui est conformée pour coopérer avec les moyens de fixation amovible 19, 20.

Bien que les figures représentent des connecteurs électriques 10, 11 s'emboîtant horizontalement, c'est-à-dire que les raccords sont alignés sensiblement parallèlement à l'embase 23 et que les pattes élastiques d'accrochage 21, 22 coopèrent avec les parties mâles de connexion 10b, 11b des raccords d'extrémité, il est également possible de prévoir des connecteurs électriques s'emboitant verticalement (non représentés). Les pattes élastiques d'accrochage s'étendent alors par exemple sur la longueur des quatre raccords. La configuration des moyens de fixation amovible 19, 20 dépend de l'espace disponible autour du support de connecteur 9.

Selon un exemple de réalisation, le moyen de fixation 18 apte à maintenir les clapets anti-retour 7, 8 est également prévu pour retenir les clapets anti-retour de manière amovible. Il comporte par exemple un logement 24 de forme générale sensiblement cylindrique, conformé pour recevoir axialement les deux clapets anti-retour 7, 8 l'un au dessus de l'autre. On a représenté sur la figure 3, les clapets anti-retour 7, 8 à l'aplomb du logement 24 dans lequel ils peuvent être reçus. L'axe du logement 24 est sensiblement perpendiculaire à l'embase 23 du support de connecteurs 9.

Le logement 24 présente une première ouverture 25, conformée pour le passage des entrées respectives des clapets anti-retour 7, 8, une deuxième ouverture 26, conformée pour le passage des deux premières sorties respectives des clapets anti-retour 7, 8 et une troisième ouverture 27 conformée pour le passage des deux deuxièmes sorties respectives des clapets anti-retour 7, 8. Les ouvertures 25, 26, 27 sont agencées en Y dans le logement 24 comme les entrées et sorties des clapets 7, 8 et s'étendent longitudinalement (perpendiculairement à l'embase 23).

L'embase 23 présente en outre une paire de pattes élastiques de retenue 28, agencées symétriquement en bordure du logement 24. Les pattes élastiques de retenue 28 peuvent s'écarter élastiquement pour clipper les clapets anti-retour 7, 8 de forme complémentaire. Les pattes élastiques de retenue 28 coopèrent par exemple avec des formes complémentaires formées dans un adaptateur logeant les clapets anti-retour 7, 8. Le somment de l'adaptateur comporte par exemple une collerette coopérant avec les dents des pattes élastiques de retenue 28 (non représenté). Selon d'autres formes non représentées, l'embase présente des moyens de retenue coopérant avec une rainure centrale de l'adaptateur ou l'embase présente deux paires de pattes élastiques de retenue, agencées l'une au-dessus de l'autre, chaque paire de pattes élastique étant adaptée pour coopérer avec un clapet anti-retour respectif.

Le premier et le deuxième moyens de fixation amovibles 19, 20 aptes à maintenir respectivement le premier et le deuxième connecteurs électriques 10, 11 et le moyen de fixation 18 apte à maintenir les deux clapets anti-retour 7, 8 sont agencés sur une même face de l'embase 23 du support de connecteurs 9. Cet agencement facilite l'accès aux connecteurs électriques 10, 11 et aux clapets anti-retour 7, 8. Les premier et le deuxième moyens de fixation 19, 20 aptes à maintenir de manière amovible respectivement le premier et le deuxième connecteurs électriques 10, 11 sont par exemple agencés de part et d'autre du moyen de fixation 18 apte à maintenir les deux clapets anti-retour 7, 8.

L'embase 23 peut comporter par ailleurs un moyen de maintien à un véhicule automobile. Le moyen de maintien comporte par exemple trois glissières 29 agencées sur trois côtés de la tranche de l'embase 23. Les glissières 29 forment des guides pour le passage de trois pattes de fixation complémentaires du véhicule automobile (non représentées).

Le support de connecteurs 9 comportant les glissières de maintien 28, les premier et deuxième moyens de fixation 19, 20 aptes à maintenir les connecteurs électriques 10, 11 et le moyen de fixation 18 apte à maintenir au moins un clapet anti-retour 7, 8, est par exemple en matériau plastique et est réalisé en une seule pièce par moulage.

En cours d'utilisation, dans un premier sens du balai d'essuie-glace, la pompe 12 distribue le liquide lave-glace dans le premier canal de circulation de la conduite principale sous-capot 4, puis dans les conduites secondaires des balais d'essuie-glaces 5, 6 et alimente les premières rampes d'arrosage des deux balais d'essuie-glace 2, 3 en liquide lave-glace contenu dans le réservoir 13 via le premier clapet anti-retour 7. Les conducteurs chauffants 15, 16 chauffent les manchons qui réchauffent à leur tour le liquide lave-glace lors de son écoulement dans les canaux de circulation entre la pompe 12 et les balais d'essuie-glace 2, 3. De même, dans le sens opposé des balais d'essuie-glace 2, 3, le deuxième canal de circulation de la conduite principale sous-capot 4 alimente les deuxièmes rampes d'arrosage des deux balais d'essuie-glace 2, 3 en liquide lave-glace via le deuxième clapet anti-retour 8 et la pompe 12.

Bien que le support de connecteurs 9 qui vient d'être décrit soit adapté pour un dispositif de distribution dans lequel les conduites sont chauffées, ce même support de connecteurs 9 s'adapte très facilement à un dispositif de distribution dans lequel seuls les balais d'essuie-glace sont chauffés. Dans ce cas, la conduite principale et les conduites secondaires ne comportent pas de conducteurs chauffants et les connecteurs électriques ne raccordent électriquement que les éléments chauffants des balais d'essuie-glaces aux fils électriques d'alimentation.

Ce même support de connecteurs 9 s'adapte aussi très facilement à un dispositif de distribution de liquide lave-glace pour balais d'essuie-glace de véhicule automobile à double rampe d'arrosage sans chauffage. Dans ce cas, le dispositif de distribution de liquide lave-glace ne comporte pas de connecteurs électriques 10, 11. La conduite principale sous-capot 4 et les conduites secondaires de balai d'essuie-glace 5, 6 ne comportent pas de conducteurs chauffants. Il suffit donc de ne pas emboîter les connecteurs électriques 10, 11 dans les pattes élastiques d'accrochage 21, 22 du support de connecteurs 9.

Egalement, le support de connecteurs 9 s'adapte à un dispositif de distribution de liquide lave-glace pour des balais d'essuie-glace mono-rampe, chauffés ou non, présentant une unique rampe d'arrosage pour la distribution du liquide lave-glace sur un côté du bras du balai d'essuie-glace (non représenté).

Dans ce cas, outre le support de connecteurs 9, le dispositif de distribution de liquide lave-glace comporte une conduite principale sous-capot 4 et deux conduites secondaires de balai d'essuie-glace 5, 6, un unique clapet anti-retour 7 et deux connecteurs électriques 10, 11 si les balais d'essuie-glace et/ou les conduites sont chauffées.

La conduite principale sous-capot 4 et les conduites secondaires de balai d'essuie-glace 5, 6 comportent respectivement soit un manchon extrudé de deux canaux de circulation dont est « bouché » ou non percé pour être inactif.

En cours d'utilisation, la pompe 12 distribue le liquide lave-glace dans le canal de circulation de la conduite principale sous-capot 4, puis dans les canaux de circulation des conduites secondaires des balais d'essuie-glaces 6, 7 pour alimenter les rampes d'arrosage des balais d'essuie-glace.

L'adaptateur loge alors un unique clapet anti-retour et est par exemple conformé pour coopérer avec les pattes élastiques de retenue 28 du support de connecteur 9, pour clipper le clapet anti-retour. Il suffit donc de ne pas loger un deuxième clapet anti-retour dans l'adaptateur reçu dans le logement 24.

Les figures 5a et 5b représentent un deuxième mode de réalisation d'un support de connecteurs 30 pour un dispositif de distribution de liquide lave-glace pour balais d'essuie-glace de véhicule automobile à double rampe d'arrosage avec une conduite principale sous-capot et des conduites secondaires de balai d'essuie-glace chauffées pour réchauffer le liquide lave-glace.

Dans ce deuxième mode de réalisation, le premier et le deuxième moyens de fixation 19, 20 aptes à maintenir de manière amovible respectivement le premier et le deuxième connecteurs électriques 10, 11 et le moyen de fixation 31 apte à maintenir les deux clapets anti-retour 7, 8 sont agencés sur des faces opposées de l'embase du support de connecteurs 30. Le premier et le deuxième moyens de fixation 19, 20 aptes à maintenir de manière amovible respectivement le premier et le deuxième connecteurs électriques 10, 11 sont par exemple agencés côte à côte.

En outre, le moyen de fixation 31 apte à maintenir les clapets anti-retour 7, 8 comporte un logement 32 de forme générale sensiblement cylindrique, dont les parois 33 sont conformées pour maintenir les deux clapets anti-retour 7, 8 par déformation élastique.

La figure 6 représente un troisième mode de réalisation d'un support de connecteurs 40 pour un dispositif de distribution de liquide lave-glace pour balais d'essuie-glace de véhicule automobile à double rampe d'arrosage dans lequel la conduite principale sous-capot 4 et les conduites secondaires de balai d'essuie-glace 5, 6 sont chauffées.

Dans ce troisième mode de réalisation, les connecteurs électriques 34, 35 présentent deux parties mâles de connexion 34a, 34b, 35a, 35b qui se raccordent ensemble électriquement. Les connecteurs électriques 34, 35 peuvent ainsi raccorder les fils électriques d'alimentation du véhicule automobile aux conducteurs chauffants 16 des conduites secondaires des balais d'essuie-glace 5, 6 respectives et des fils électriques supplémentaires 36 qui suivent les conduites secondaires des balais d'essuie-glace 5, 6 pour alimenter des éléments chauffants dans les balais d'essuie-glace.

En outre, le premier et le deuxième moyen de fixation par emboîtage élastique des connecteurs électriques 34, 35 sont formés par des portions 37, 38 de la tranche de l'embase 39 du support de connecteurs 40, conformées pour coopérer avec les connecteurs électriques 34, 35.

Plus spécifiquement, la première et la deuxième portions conformées 37, 38 forment des portions femelles de connexion entourées d'une collerette respective. Les portions femelles de connexion coopèrent avec les portions mâle de connexion 34a, 34b, 35a, 35b tandis que les collerettes coopèrent avec des pattes élastiques de clippage complémentaires 41 portées par les parties mâles de connexion 34a, 34b, 35b, 35b respectives des connecteurs électriques 34, 35 (l'intérieur du support de connecteurs 40 est représenté en transparence sur la figure 6).

Dans ce troisième mode de réalisation, le logement 32 est agencé sur une face de l'embase 39 tandis que les moyens de fixation amovibles des connecteurs électriques 34, 35 sont agencés dans la tranche de l'embase 39. Cet agencement permet d'enficher des portions mâles de connexion 34a, 34b, 35b, 35b dans le support de connecteurs 40.

## Revendications

1. Support de connecteurs pour dispositif de distribution de liquide lave-glace de balais d'essuie-glace de véhicule automobile, comportant un moyen de fixation (18 ; 31) apte à maintenir au moins un clapet anti-retour (7, 8), **caractérisé en ce qu'**il comporte en outre un premier moyen de fixation (19) apte à maintenir de manière amovible un premier connecteur électrique (10 ; 34) et un deuxième moyen de fixation (20) apte à maintenir de manière amovible un deuxième connecteur électrique (11 ; 35), le moyen de fixation (18 ; 31) du clapet anti-retour (7, 8), le premier moyen de fixation amovible (19) du premier connecteur électrique (10 ; 34) et le deuxième moyen de fixation amovible (20) du deuxième connecteur électrique (11 ; 35) étant indépendants.

2. Support de connecteurs selon la revendication 1, **caractérisé en ce que** le premier et/ou le deuxième moyen de fixation amovible (19, 20) est formé par emboîtage élastique.

3. Support de connecteurs selon la revendication 2, **caractérisé en ce que** le premier et/ou le deuxième moyen de fixation amovible par emboîtage élastique (19, 20) comporte au moins une paire de pattes élastiques d'accrochage (21, 22) aptes à clipper un connecteur électrique de forme complémentaire (10, 11).

4. Support de connecteurs selon la revendication 2, **caractérisé en ce que** le premier et/ou le deuxième moyen de fixation amovible par emboîtage élastique (19, 20) est formé par au moins une portion (37, 38) d'une embase (39) du support de connecteurs (40), conformée pour coopérer avec des pattes élastiques de clippage complémentaires (41) portées par les connecteurs électriques (34, 35).

5. Support de connecteurs selon l'une des revendications 1 à 4, **caractérisé en ce que** le premier et le deuxième moyens de fixation amovibles (19, 20) sont identiques.

6. Support de connecteurs selon l'une des revendications 1 à 5, **caractérisé en ce que** le moyen de fixation du clapet anti-retour (18) est apte à maintenir au moins un clapet anti-retour (7, 8) de manière amovible.

7. Support de connecteurs selon la revendication 6, **caractérisé en ce que** le moyen de fixation amovible (18) apte à maintenir au moins un clapet anti-retour (7, 8) comporte un logement (24 ; 32) de forme générale sensiblement cylindrique, conformé pour recevoir axialement deux clapets anti-retour (7, 8) l'un au dessus de l'autre, le logement (24 ; 32) présentant une première ouverture (25) conformée pour le passage des entrées respectives des clapets anti-retour (7, 8), une deuxième ouverture (26) conformée pour le passage des deux premières sorties respectives des clapets anti-retour (7, 8) et une troisième ouverture (27) conformée pour le passage des deux deuxièmes sorties respectives des clapets anti-retour (7, 8).

8. Support de connecteurs selon la revendication 7, **caractérisé en ce qu'**il comporte une embase (23) présentant au moins une paire de pattes élastiques de retenue (28) en bordure du logement (27), pour clipper au moins un clapet anti-retour (7, 8).

9. Support de connecteurs selon la revendication 7, **caractérisé en ce que** les parois du logement (27) sont conformées pour maintenir les clapets anti-retour (7, 8) par déformation élastique.

10. Support de connecteurs selon l'une des revendications précédentes, **caractérisé en ce que** le premier et le deuxième moyens de fixation amovibles (19, 20) aptes à maintenir respectivement un premier et un deuxième connecteurs électriques (10, 11) et le moyen de fixation (18) apte à maintenir au moins un clapet anti-retour (7, 8), sont agencés sur une même face d'une embase (23) du support de connecteurs (9).

11. Support de connecteurs selon l'une des revendications précédentes, **caractérisé en ce qu'**il comporte une embase (23) présentant un moyen de maintien à un véhicule automobile.

12. Support de connecteurs selon la revendication 11, **caractérisé en ce que** le moyen de maintien comporte trois glissières (28) agencées sur la tranche de l'embase (23) pour le passage de trois pattes de fixation complémentaires du véhicule automobile.

13. Support de connecteurs selon l'une des revendications précédentes, **caractérisé en ce qu'**il est en matériau plastique et est réalisé en une seule pièce par moulage.

14. Dispositif de distribution comportant :
- un support de connecteurs (9 ; 30 ; 40) selon l'une des revendications précédentes,
- au moins un clapet anti-retour (7, 8) fixé au support de connecteur (9 ; 30 ; 40), le clapet anti-retour (7, 8) présentant une entrée et deux sorties,
- une conduite principale sous-capot (4) comportant un manchon extrudé d'au moins un canal de circulation (14a, 14b) hydrauliquement raccordé à l'entrée du clapet anti-retour (7, 8), et
- deux conduites secondaires de balai d'essuie-glace (5, 6) comportant un manchon extrudé d'au moins un canal de circulation hydrauliquement raccordé à une sortie respective du clapet anti-retour (7, 8).

15. Dispositif de distribution selon la revendication 14, **caractérisé en ce que** la conduite principale sous-capot (4) et les conduites secondaires de balai d'essuie-glace (5, 6) comportent respectivement au moins deux conducteurs chauffants (15, 16) noyés dans la masse du manchon et **en ce que** le dispositif de distribution comporte deux connecteurs électriques (10, 11 ; 34, 35) maintenus respectivement dans le premier et le deuxième moyens de fixation amovible (19, 20) du support de connecteur (9 ; 30 ; 40), les conducteurs chauffants (16) des conduites secondaires de balai d'essuie-glace (5, 6) étant électriquement raccordés dans un connecteur électrique (10, 11 ; 34, 35) respectif.

## Patentansprüche

1. Stütze für Befestigungsvorrichtung für eine Waschflüssigkeitszuführvorrichtung für eine Fahrzeugwischeranlage, umfassend ein Befestigungsmittel (18; 31), das geeignet ist, mindestens ein Rückschlagventil (7, 8) zu halten, **dadurch gekennzeichnet, dass** sie ferner ein erstes Befestigungsmittel (19), das geeignet ist, einen ersten elektrischen Verbinder (10; 34) abnehmbar zu halten, und ein zweites Befestigungsmittel (20) aufweist, das geeignet ist, einen zweiten elektrischen Verbinder (11; 35) abnehmbar zu halten, wobei das Befestigungsmittel (18; 31) des Rückschlagventils (7, 8), das erste abnehmbare Befestigungsmittel (19) des ersten elektrischen Verbinders (10; 34) und das zweite abnehmbare Befestigungsmittel (20) des zweiten elektrischen Verbinders (11; 35) unabhängig sind.

2. Stütze für Befestigungsvorrichtung nach Anspruch 1, **dadurch gekennzeichnet, dass** das erste und/oder das zweite abnehmbare Befestigungsmittel (19, 20) durch elastisches Einstecken gebildet ist.

3. Stütze für Befestigungsvorrichtung nach Anspruch 2, **dadurch gekennzeichnet, dass** das erste und/oder das zweite abnehmbare Befestigungsmittel durch elastisches Einstecken (19, 20) mindestens ein Paar elastische Einhakklauen (21, 22) aufweist, die geeignet sind, einen elektrischen Verbinder von komplementärer Form (10, 11) einzuklemmen.

4. Stütze für Befestigungsvorrichtung nach Anspruch 2, **dadurch gekennzeichnet, dass** das erste und/oder das zweite abnehmbare Befestigungsmittel durch elastisches Einstecken (19, 20) durch mindestens einen Abschnitt (37, 38) eines Sockels (39) der Stütze für Befestigungsvorrichtung (40) gebildet ist, der geformt ist, um mit komplementären elastischen Klauen zum Einklemmen (41), die durch die elektrischen Verbinder (34, 35) getragen sind, zusammenzuwirken.

5. Stütze für Befestigungsvorrichtung nach einem der Ansprüche 1 bis 4, **dadurch gekennzeichnet, dass** das erste und das zweite abnehmbare Befestigungsmittel (19, 20) identisch sind.

6. Stütze für Befestigungsvorrichtung nach einem der Ansprüche 1 bis 5, **dadurch gekennzeichnet, dass** das Befestigungsmittel des Rückschlagventils (18) geeignet ist, mindestens ein Rückschlagventil (7, 8) abnehmbar zu halten.

7. Stütze für Befestigungsvorrichtung nach Anspruch 6, **dadurch gekennzeichnet, dass** das abnehmbare Befestigungsmittel (18), das geeignet ist, mindestens ein Rückschlagventil (7, 8) zu halten, eine Aussparung (24; 32) von allgemein im Wesentlichen zylindrischer Form aufweist, die gebildet ist, um axial übereinander zwei Rückschlagventile (7, 8) aufzunehmen, wobei die Aussparung (24; 32) eine erste Öffnung (25), die für den Durchgang der jeweiligen Eingänge der Rückschlagventile (7, 8) gebildet ist, eine zweite Öffnung (26), die für den Durchgang der jeweiligen zwei ersten Ausgänge der Rückschlagventile (7, 8) gebildet ist, und eine dritte Öffnung (27) aufweist, die für den Durchgang der jeweiligen zwei zweiten Ausgänge der Rückschlagventile (7, 8) gebildet ist.

8. Stütze für Befestigungsvorrichtung nach Anspruch 7, **dadurch gekennzeichnet, dass** sie einen Sockel (23) aufweist, der mindestens ein Paar elastische Halteklauen (28) am Rand der Aussparung (27) aufweist, um mindestens ein Rückschlagventil (7, 8) einzuklemmen.

9. Stütze für Befestigungsvorrichtung nach Anspruch 7, **dadurch gekennzeichnet, dass** die Wände der Aussparung (27) gebildet sind, um die Rückschlagventile (7, 8) durch elastische Verformung zu halten.

10. Stütze für Befestigungsvorrichtung nach einem der vorhergehenden Ansprüche, **dadurch gekennzeichnet, dass** das erste und das zweite abnehmbare Befestigungsmittel (19, 20), die geeignet sind, jeweils einen ersten und einen zweiten elektrischen Verbinder (10, 11) zu halten, und das Befestigungsmittel (18), das geeignet ist, mindestens ein Rückschlagventil (7, 8) zu halten, auf einer gleichen Seite eines Sockels (23) der Stütze für Befestigungsvorrichtung (9) angeordnet sind.

11. Stütze für Befestigungsvorrichtung nach einem der vorhergehenden Ansprüche, **dadurch gekennzeichnet, dass** sie einen Sockel (23) aufweist, der ein Mittel zum Halten an einem Kraftfahrzeug aufweist.

12. Stütze für Befestigungsvorrichtung nach Anspruch 11, **dadurch gekennzeichnet, dass** das Mittel zum Halten drei Schienen (28), die auf dem Rand des Sockels (23) angeordnet sind, für den Durchgang von drei komplementären Befestigungsklauen des Kraftfahrzeugs aufweist.

13. Stütze für Befestigungsvorrichtung nach einem der vorhergehenden Ansprüche, **dadurch gekennzeichnet, dass** sie aus Kunststoffmaterial ist und aus einem einzigen Stück durch Formung gefertigt ist.

14. Zuführvorrichtung, umfassend:
- eine Stütze für Befestigungsvorrichtung (9; 30; 40) nach einem der vorhergehenden Ansprüche,
- mindestens ein Rückschlagventil (7, 8), das an der Stütze für Befestigungsvorrichtung (9; 30; 40) befestigt ist, wobei das Rückschlagventil (7, 8) einen Eingang und zwei Ausgänge aufweist,
- eine Hauptleitung unter einer Abdeckung (4), die eine extrudierte Muffe von mindestens einem Strömungskanal (14a, 14b) aufweist, die hydraulisch an den Eingang des Rückschlagventils (7, 8) angeschlossen ist,
und
- zwei Sekundärleitungen der Wischeranlage (5, 6), die eine extrudierte Muffe von mindestens einem Strömungskanal aufweisen, die hydraulisch an jeweils einen Ausgang des Rückschlagventils (7, 8) angeschlossen ist.

15. Zuführvorrichtung nach Anspruch 14, **dadurch gekennzeichnet, dass** die Hauptleitung unter einer Abdeckung (4) und die Sekundärleitungen der Wischeranlage (5, 6) jeweils mindestens zwei Heizleiter (15, 16) aufweisen, die in der Masse der Muffe eingebettet sind, und dass die Zuführvorrichtung zwei elektrische Verbinder (10, 11; 34, 35) aufweist, die jeweils in dem ersten und dem zweiten abnehmbaren Befestigungsmittel (19, 20) der Stütze für Befestigungsvorrichtung (9; 30; 40) gehalten sind, wobei die Heizleiter (16) der Sekundärleitungen der Wischeranlage (5, 6) elektrisch in jeweils einem elektrischen Verbinder (10, 11; 34, 35) angeschlossen sind.

## Claims

1. Connector support for windscreen washer liquid distribution devices of motor vehicle windscreen wipers, including fixing means (18; 31) adapted to hold at least one check valve (7, 8), **characterized in that** it further includes first fixing means (19) adapted to hold removably a first electrical connector (10; 34) and second fixing means (20) adapted to hold removably a second electrical connector (11; 35), the fixing means (18; 31) for the check valve (7, 8), the first removable fixing means (19) for the first electrical connector (10; 34) and the second removable fixing means (20) for the second electrical connector (11; 35) being independent.

2. Connector support according to Claim 1, **characterized in that** the first and/or second removable fixing means (19, 20) function by elastic nesting.

3. Connector support according to Claim 2, **characterized in that** the first and/or second removable fixing means (19, 20) that function by elastic nesting include at least one pair of elastic clips (21, 22) adapted to clip an electrical connector (10, 11) of complementary shape.

4. Connector support according to Claim 2, **characterized in that** the first and/or second removable fixing means (19, 20) that function by elastic nesting are formed by at least one portion (37, 38) of a base (39) of the connector support (40) conformed to cooperate with complementary elastic clips (41) carried by the electrical connectors (34, 35).

5. Connector support according to any one of Claims 1 to 4, **characterized in that** the first and second removable fixing means (19, 20) are identical.

6. Connector support according to any one of Claims 1 to 5, **characterized in that** the fixing means for the check valve (18) are adapted to hold removably at least one check valve (7, 8).

7. Connector support according to Claim 6, **characterized in that** the removable fixing means (18) adapted to hold at least one check valve (7, 8) include a housing (24; 32) of substantially cylindrical general shape conformed to receive axially two check valves (7, 8) one above the other, the housing (24; 32) including a first opening (25) conformed for the respective inlets of the check valves (7, 8) to pass through, a second opening (26) conformed for the respective first outlets of the check valves (7, 8) to pass through, and a third opening (27) conformed for the respective second outlets of the check valves (7, 8) to pass through.

8. Connector support according to Claim 7, **characterized in that** it includes a base (23) including at least one pair of elastic retaining clips (28) at the edge of the housing (27) for clipping at least one check valve (7, 8).

9. Connector support according to Claim 7, **characterized in that** the walls of the housing (27) are conformed to hold the check valves (7, 8) by elastic deformation.

10. Connector support according to any one of the preceding claims, **characterized in that** the first and second removable fixing means (19, 20) respectively adapted to hold first and second electrical connectors (10, 11) and the fixing means (18) adapted to hold at least one check valve (7, 8) are arranged on the same side of a base (23) of the connector support (9).

11. Connector support according to any one of the preceding claims, **characterized in that** it includes a base (23) including means for retaining it on a motor vehicle.

12. Connector support according to Claim 11, **characterized in that** the retaining means include three slides (28) arranged on the edge surface of the base (23) for three complementary fixing clips of the motor vehicle to pass through.

13. Connector support according to any one of the preceding claims, **characterized in that** it is moulded in one piece from plastic material.

14. Distribution device including:
- a connector support (9; 30; 40) according to any one of the preceding claims,
- at least one check valve (7, 8) fixed to the connector support (9; 30; 40), the check valve (7, 8) having one inlet and two outlets,
- an under-bonnet main pipe (4) including an extruded sleeve including at least one circulation passage (14a, 14b) hydraulically connected to the inlet of the check valve (7, 8), and
- two windscreen wiper secondary pipes (5, 6) including an extruded sleeve including at least one circulation passage hydraulically connected to a respective outlet of the check valve (7, 8).

15. Distribution device according to Claim 14, **characterized in that** the under-bonnet main pipe (4) and the windscreen wiper secondary pipes (5, 6) respectively include at least two heating wires (15, 16) embedded in the sleeve and **in that** the distribution device includes two electrical connectors (10, 11; 34, 35) respectively held in the first and second removable fixing means (19, 20) of the connector support (9; 30; 40), the heating wires (16) of the windscreen wiper secondary pipes (5, 6) being electrically connected in a respective electrical connector (10, 11; 34, 35).
